(19) Europäisches Patentamt
European Patent Office
Office européen des brevets

(11) EP 0 725 037 B2

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**25.04.2012 Patentblatt 2012/17**

(51) Int Cl.:
***C01B 33/18*** *(2006.01)*

(45) Hinweis auf die Patenterteilung:
**07.03.2001 Patentblatt 2001/10**

(21) Anmeldenummer: **96101193.9**

(22) Anmeldetag: **29.01.1996**

(54) **Granulate auf Basis von pyrogen hergestelltem Siliciumdioxid, Verfahren zu ihrer Herstellung und ihre Verwendung**

Granules on the basis of pyrogenic silica, process for their preparation and use thereof

Granules à base de silice pyrogène, procédé pour leur préparation et leur utilisation

(84) Benannte Vertragsstaaten:
**BE DE ES FR GB IE IT NL PT**

(30) Priorität: **04.02.1995 DE 19503717**
**17.01.1996 DE 19601415**

(43) Veröffentlichungstag der Anmeldung:
**07.08.1996 Patentblatt 1996/32**

(73) Patentinhaber: **Evonik Degussa GmbH**
**45128 Essen (DE)**

(72) Erfinder:
- **Deller, Klaus, Dr.**
**D-63512 Hainburg (DE)**
- **Krause, Helmfried**
**D-63517 Rodenbach (DE)**
- **Meyer, Jürgen, Dr.**
**D-79618 Rheinfelden (DE)**
- **Kerner, Dieter, Dr.**
**Midland Park,**
**New Jersey 07432 (DE)**
- **Hartmann, Werner, Dr.**
**D-64832 Babenhausen (DE)**
- **Lansink-Rotgerink, Hans, Dr.**
**D-63864 Glattbach (DE)**

(56) Entgegenhaltungen:
**EP-A- 0 050 902**
**EP-A- 0 241 647**
**DE-A- 2 831 508**
**DE-C- 1 209 108**
**US-A- 2 993 809**

EP 0 725 037 B2

## Beschreibung

Die Erfindung betrifft Granulate auf Basis von pyrogen hergestelltem Siliciumdioxid, das Verfahren zu ihrer Herstellung und ihre Verwendung als Katalysatorträger.

Es ist bekannt, pyrogene Kieselsäuren oder Siliciumdioxide mittels Hochtemperatur oder Flammenhydrolyse aus $SiCl_4$ herzustellen (Ullmanns Enzyklopädie der technischen Chemie, 4. Auflage, Band 21, Seite 464 (1982)).

Pyrogene Siliciumdioxide zeichnen sich durch extreme Feinteiligkeit, hohe spezifische Oberfläche (BET), sehr hohe Reinheit, sphärische Teilchenform und das Fehlen von Poren aus. Aufgrund dieser Eigenschaften finden pyrogen hergestellte Siliciumdioxide zunehmend Interesse als Träger für Katalysatoren (Dr. Koth et al., Chem. Ing. Techn. **52**, 628 (1980)). Für diese Verwendung wird das pyrogen hergestellte Siliciumdioxides auf mechanischem Wege mittels zum Beispiel Tablettiermaschinen verformt.

Es ist bekannt, pyrogen hergestelltes Silicumdioxid auch mittels Sprühtrocknung zu Sprühgranulaten zu verformen, um ein Ausgangsmaterial für Werkstoffe aus Sinterkeramik zu erhalten (DE-A 36 11 449).

Es ist weiterhin bekannt, pyrogen im Lichtbogen hergestelltes Siliciumdioxid mittels Sprühtrocknung zu Sprühgranulaten, die als Adsorptionsmittel oder auch als Katalysatorträger eingesetzt werden können, zu verformen (DE-A 12 09 108).

Es ist weiterhin bekannt, pyrogen hergestelltes Siliciumdioxid einem Gelverfahren zu unterwerfen und anschließend mittels Sprühtrockung zu Granulaten zu verformen. Diese Granulate werden nach der Beschichtung mit Chromoxid bei der Polymerisation von Ethylen eingesetzt (EP-A 0 050 902, US-A 4,386,016).

Es ist weiterhin bekannt, gefälltes Siliciumdioxid als Katalysatorträger für die katalytische Polymerisation von Olefinen einzusetzen (WO 91/09881).

Die bekannten Sprühgranulate des pyrogen hergestellten Siliciumdioxides haben den Nachteil, daß sie als Katalysatorträger bei zum Beispiel der Herstellung von Polyethylen nicht optimal geeignet sind.

Es bestand somit die Aufgabe, Sprühgranulate von pyprogen hergestelltem Siliciumdioxid, die als Katalysatorträger bei der Herstellung von Polyethylen eingesetzt werden können, zu entwickeln.

Gegenstand der Erfindung sind Granulate auf Basis von pyrogen mittels Flammenhydrolyse aus einer flüchtigen Siliciumverbindung hergestelltem Siliciumdioxid, die dadurch gekennzeichnet sind, daß sie bei einer Temperatur von 150 bis 1.100 °C während eines Zeitraumes von 1 bis 8 h getempert und/oder silanisiert sind und die folgenden physikalisch-chemischen Kenndaten aufweisen:

| | |
|---|---|
| Mittlerer Korndurchmesser | 10 bis 120 μm |
| BET-Oberfläche | 40 bis 400 $m^2/g$ |
| Porenvolumen | 0,5 bis 2,5 ml/g |
| Porengrößenverteilung | weniger als 5 % des Gesamtporenvolumens haben einen Porendurchmesser kleiner 5 nm Rest Meso- und Makroporen |
| pH-Wert | 3,6 bis 8,5 |
| Stampfdichte | 220 bis 700 g/l |

Das erfindungsgemäße Granulat kann hergestellt werden, indem man pyrogen mittels Flammenhydrolyse aus einer flüchtiger Silicium Verbindung hergestelltes Silicumdioxid in Wasser dispergiert wobei die Dispersion eine Konzentration an Siliciumdioxid von 5 bis etwa 19,9 gew,-% aufweist, sprühtrocknet und die erhaltenen Granulate bei einer Temperatur von 150 bis 1.100 °C während eines Zeitraumes von 1 bis 8 h tempert und/oder silanisiert.

Zur Silanisierung können Halogensilane, Alkoxysilane, Silazane und/oder Siloxane eingesetzt werden.

Insbesondere können als Halogensilane die folgenden Stoffe eingesetzt werden:

Halogenorganosilane des Types $X_3Si(C_nH_{2n+1})$

$X = Cl, Br$

$n = 1 - 20$

Halogenorganosilane des Types $X_2(R')Si(C_nH_{2n+1})$

$X = Cl, Br$

$R' = Alkyl$

$n = 1\text{-}20$

Halogenorganosilane des Types $X(R')_2Si(C_nH_{2n+1})$

$X = Cl, Br$

$R' =$ Alkyl

$n = 1 - 20$

Halogenorganosilane des Types $X_3Si(CH_2)_m\text{-}R'$

$X = Cl, Br$
$m = 0{,}1 - 20$
$R' =$ Alkyl, Aryl (z.B. $-C_6H_5$)
$-C_4F_9$, $-OCF_2\text{-}CHF\text{-}CF_3$, $-C_6F_{13}$, $-O\text{-}CF_2\text{-}CHF_2$
$-NH_2$, $-N_3$, $-SCN$, $-CH{=}CH_2$,
$-OOC(CH_3)C = CH_2$
$-OCH_2\text{-}CH(O)CH_2$

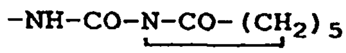

$-NH\text{-}COO\text{-}CH_3$, $-NH\text{-}COO\text{-}CH_2\text{-}CH_3$, $-NH\text{-}(CH_2)_3Si(OR)_3$
$-S_x\text{-}(CH_2)_3Si(OR)_3$

Halogenorganosilane des Types $(R)X_2Si(CH_2)_m\text{-}R'$

$X = Cl, Br$
$R =$ Alkyl
$m = 0{,}1 - 20$
$R' =$ Alkyl, Aryl (z.B. $-C_6H_5$)

$-C_4F_9$, $-OCF_2\text{-}CHF\text{-}CF_3$, $-C_6F_{13}$, $-O\text{-}CF_2\text{-}CHF_2$
$-NH_2$, $-N_3$, $-SCN$, $-CH{=}CH_2$,
$-OOC(CH_3)C = CH_2$
$-OCH_2\text{-}CH(O)CH_2$

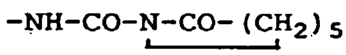

$-NH\text{-}COO\text{-}CH_3$, $-NH\text{-}COO\text{-}CH_2\text{-}CH_3$, $-NH\text{-}(CH_2)_3Si(OR)_3$
$-S_x\text{-}(CH_2)_3Si(OR)_3$

Halogenorganosilane des Types $(R)_2X\ Si(CH_2)_m\text{-}R'$

$X = Cl, Br$
$R =$ Alkyl
$m = 0{,}1 - 20$
$R' =$ Alkyl, Aryl (z.B. $-C_6H_5$)

$-C_4F_9$, $-OCF_2\text{-}CHF\text{-}CF_3$, $-C_6F_{13}$, $-O\text{-}CF_2\text{-}CHF_2$
$-NH_2$, $-N_3$, $-SCN$, $-CH{=}CH_2$,
$-OOC(CH_3)C = CH_2$
$-OCH_2\text{-}CH(O)CH_2$

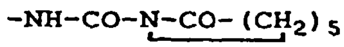

$-NH-COO-CH_3$, $-NH-COO-CH_2-CH_3$, $-NH-(CH_2)_3Si(OR)_3$
$-S_x-(CH_2)_3Si(OR)_3$

Insbesondere können als Alkoxysilane die folgenden Stoffe eingesetzt werden:

Organosilane des Types $(RO)_3Si(C_nH_{2n+1})$

R = Alkyl

n = 1 - 20

Organosilane des Types $R'_x(RO)_ySi(C_nH_{2n+1})$

R = Alkyl

R' = Alkyl

n = 1 - 20

x+y = 3

x = 1,2

y = 1,2

Organosilane des Types $(RO)_3Si(CH_2)_m-R'$

R = Alkyl
m = 0,1 - 20
R' = Alkyl, Aryl (z.B. $-C_6H_5$)

$-C_4F_9$, $OCF_2-CHF-CF_3$, $-C_6F_{13}$, $-O-CF_2-CHF_2$
$-NH_2$, $-N_3$, -SCN, $-CH=CH_2$,
$-OOC(CH_3)C = CH_2$
$-OCH_2-CH(O)CH_2$

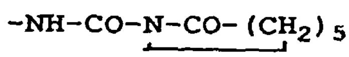

$-NH-COO-CH_3$, $-NH-COO-CH_2-CH_3$, $-NH-(CH_2)_3Si(OR)_3$
$-S_x-(CH_2)_3Si(OR)_3$

Organosilane des Typs $(R'')_x(RO)_ySi(CH_2)_m-R'$

R" = Alkyl

x+y = 2

x = 1,2

y = 1,2

R' = Alkyl, Aryl (z.B. $-C_6H_5$)

$-C_4F_9$, $-OCF_2-CHF-CF_3$, $-C_6F_{13}$, $-O-CF_2-CHF_2$
$-NH_2$, $-N_3$, -SCN, $-CH=CH_2$,
$-OOC(CH_3)C = CH_2$
$-OCH_2-CH(O)_2CH_2$

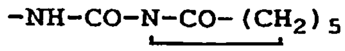

$-NH-COO-CH_3$, $-NHCOO-CH_2-CH_3$, $-NH-(CH_2)_3Si(OR)_3$
$-S_x-(CH_2)_3Si(OR)_3$

Bevorzugt kann man als Silanisierungsmittel das Silan Si 108 $[(CH_3O)_3-Si-C_8H_{17}]$ Trimethoxyoctylsilan einsetzen.

Insbesondere können als Silazane die folgenden Stoffe eingesetzt werden:

Silazane des Types

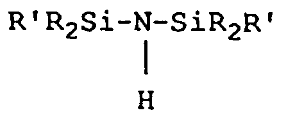

R = Alkyl
R' = Alkyl, Vinyl

sowie zum Beispiel Hexamethyldisilazan.

Insbesondere können als Siloxane die folgenden Stoffe eingesetzt werden:

Cyclische Polysiloxane des Types D 3, D 4, D 5 z.B. Octamethylcyclotetrasiloxan = D 4

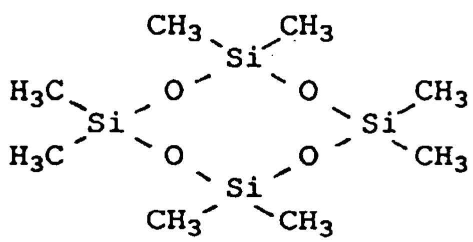

Polysiloxane bzw: Silikonöle des Types

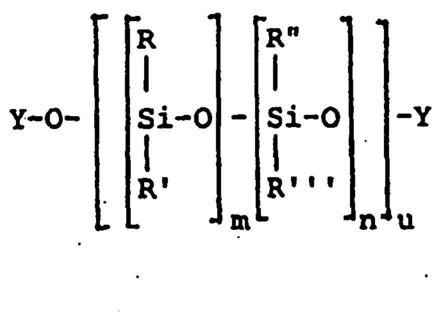

m = 0,1,2,3,...∞
n = 0,1,2,3,...∞
u = 0,1,2,3,...∞

$Y=CH_3$, H, $C_nH_{2n+1}$ n=1-20
$Y=Si(CH_3)_3$, $Si(CH_3)_2H$
$Si(CH_3)_2OH$, $Si(CH_3)_2(OCH_3)$
$Si(CH_3)_2(C_nH_{2n+1})$ n=1-20

R = Alkyl, Aryl, $(CH_2)_n-NH_2$, H

R' = Alkyl, Aryl, $(CH_2)_n$ - $NH_2$, H
R'' = Alkyl, Aryl, $(CH_2)_n$- $NH_2$, H
R''' = Alkyl, Aryl, $(CH_2)_n$ - $NH_2$, H

Vorzugsweise kann das erfindungsgemäße Granulat Meso- und Makroporen aufweisen, wobei das Volumen der Mesoporen 10 bis 80 % vom Gesamtporenvolumen ausmachen.

Der Kohlenstoffgehalt des erfindungsgemäßen Granulates kann 0,3 bis 15,0 Gew.-% betragen.

Die Teilchengrößenverteilung des erfindungsgemäßen Granulates kann 80 Vol.-% größer 8 μm und 80 Vol.-% kleiner 96 μm sein.

Der Anteil an Poren kleiner 5 μm kann in einer bevorzugten Ausführungsform der Erfindung maximal 5 %, bezogen auf das Gesamtporenvolumen, betragen.

Ein weiterer Gegenstand der Erfindung ist ein Verfahren zur Herstellung von Granulaten auf Basis von pyrogen hergestelltem Siliciumdioxid, welches dadurch gekennzeichnet ist, daß man pyrogen hergestelltes Siliciumdioxid, vorzugsweise mittels Flammenhydrolyse aus Siliciumtetrachlorid hergestelltes Siliciumdioxid, in Wasser dispergiert, sprühtrocknet, die erhaltenen Granulate bei einer Temperatur von 150 bis 1.100 °C während eines Zeitraumes von 1 bis 8 h tempert und/oder silanisiert.

Die Dispersion in Wasser kann eine Konzentration an Siliciumdioxid von 5 bis 25 Gew.-% aufweisen.

Die Sprühtrocknung kann man bei einer Temperatur von 200 bis 600 °C durchführen. Dabei kann man Scheibenzerstäuber oder Düsenzerstäuber einsetzen.

Die Temperung der Granulate kann man sowohl in ruhender Schüttung, wie zum Beispiel in Kammeröfen, als auch in bewegter Schüttung, wie zum Beispiel Drehrohrtrockner, durchführen.

Die Silanisierung kann mit denselben Halogensilanen, Alkoxysilanen, Silazanen und/oder Siloxanen wie oben beschrieben durchgeführt werden, wobei das Silanisierungsmittel gegebenenfalls in einem organischen Lösungsmittel, wie zum Beispiel Ethanol, gelöst sein kann.

Bevorzugt kann man als Silanisierungsmittel das Silan Si 108 $[(CH_3O)_3$-Si-$C_8H_{17}]$ Trimethoxyoctylsilan einsetzen.

Die Silanisierung kann man durchführen, indem man das Granulat mit dem Silanisierungsmittel besprüht und das Gemisch anschließend bei einer Temperatur von 105 bis 400 °C über einen Zeitraum von 1 bis 6 h thermisch behandelt.

Eine alternative Methode der Silanisierung der Granulate kann man durchführen, indem man das Granulat mit dem Silanisierungsmittel in Dampfform behandelt und das Gemisch anschließend bei einer Temperatur von 200 bis 800 °C über einen Zeitraum von 0,5 bis 6 h thermisch behandelt.

Die thermische Behandlung kann unter Schutzgas, wie zum Beispiel Stickstoff, erfolgen.

Die Silanisierung kann man in beheizbaren Mischern und Trocknern mit Sprüheinrichtungen kontinuierlich oder ansatzweise durchführen. Geeignete Vorrichtungen können zum Beispiel sein: Pflugscharmischer, Teller-, Wirbelschichtoder Fließbetttrockner.

Durch die Variation der Einsatzstoffe, der Bedingungen bei der Sprühung, der Temperung und der Silanisierung kann man die physikalisch-chemischen Parameter der Granulate, wie die spezifische Oberfläche, die Korngrößenverteilung, das Porenvolumen, die Stampfdichte und die SilanolgruppenKonzentration, Porenverteilung und pH-Wert innerhalb der angegebenen Grenzen verändern.

Die erfindungsgemäßen Granulate können als Träger für Polymerisations-Katalysatoren, insbesondere als Träger für Katalysatoren für die Herstellung von Polyethylen, eingesetzt werden.

Sie weisen vorteilhafterweise eine hohe Reinheit, eine hohe Thermostabilität, eine niedrige Silanolgruppenkonzentration, eine microsphärische Teilchenform der Primärpartikel und weniger als 5 % des Gesamtporenvolumens haben einen Porendurchmesser kleiner 5 nm.

Ein weiterer Gegenstand der Erfindung ist die Verwendung der Granulate als Katalysatorträger, insbesondere zur Herstellung von Polymerisationskatalysatoren. In einer bevorzugten Ausführungsform der Erfindung können die erfindungsgemäßen Granulate als Katalysatorträger für die Herstellung von Katalysatoren zur Herstellung von Polyethylen verwendet werden.

## Beispiele

Als pyrogen hergestellte Siliciumdioxide werden Siliciumdioxide mit den folgenden physikalisch-chemischen Kenndaten eingesetzt:

| | AEROSIL 90 | AEROSIL 130 | AEROSIL 150 | AEROSIL 200 | AEROSIL 300 | AEROSIL 380 | AEROSIL OX50 |
|---|---|---|---|---|---|---|---|
| CAS-Reg Nummer | 112945-52-5 (alte Nr.: 7631-86-9) | | | | | | |
| Verhalten gegenüber Wasser | hydrophil | | | | | | |
| Aussehen | lockeres weißes Pulver | | | | | | |
| Oberfläche nach BET[1) ] $m^2/g$ | 90 $\pm$ 15 | 130 $\pm$ 25 | 150 $\pm$ 15 | 200 $\pm$ 25 | 300 $\pm$ 30 | 380 $\pm$ 30 | 50 $\pm$ 15 |
| Mittlere Größe der Primärteilchen mm | 20 | 16 | 14 | 12 | 7 | 7 | 40 |
| Stampfdichte 2)<br>normale Ware g/l<br>verdichtete Ware g/l (Zusatz "V") | <br>ca. 80<br>- | <br>ca. 50<br>ca. 120 | <br>ca. 50<br>ca. 120 | <br>ca. 50<br>ca. 120 | <br>ca. 50<br>ca. 120 | <br>ca. 50<br>ca. 120 | <br>ca. 130<br>- |
| Trocknungsverlust [3)] (2 h bei 105°C) % bei Verlassen des Lieferwerkes | < 1,0 | < 1,5 | < 0,5 [9)] | < 1,5 | < 1,5 | < 1,5 | < 1,5 |
| Glühverdust [4)7)] (2 h bei 1.000°C) % | <1 | <1 | <1 | <1 | <2 | < 2,5 | <1 |
| pH-Wert 5)(in 4%Iger wäßriger Disperson) | 3,6 - 4,5 | 3,6 - 4,3 | 3,6 - 4,3 | 3,6 - 4,3 | 3,6 - 4,3 | 3,6 - 4,3 | 3,6 - 4,3 |
| $SiO_2$[8)] % | > 99,8 | > 99,8 | > 99,8 | > 99,8 | > 99,8 | > 99,8 | > 99,8 |
| $Al_2O_3$[8)] % | < 0,05 | < 0,05 | < 0,05 | < 0,05 | < 0,05 | < 0,05 | < 0,08 |
| $Fe_2O_3$[8)] % | < 0,003 | < 0,003 | < 0,003 | < 0,003 | < 0,003 | < 0,003 | < 0,01 |
| $TiO_2$[8)] % | < 0,03 | < 0,03 | < 0,03 | < 0,03 | < 0,03 | < 0,03 | < 0,03 |
| HCl[8)11)] % | < 0,025 | < 0,025 | < 0,025 | < 0,025 | < 0,025 | < 0,025 | < 0,025 |
| Siebrückstand [6)](nach Mocker, 45 $\mu$m)% | < 0,05 | < 0,05 | < 0,05 | < 0,05 | < 0,05 | < 0,05 | 0,2 |

1) in Anlehnung an DIN 66131
2) in Anlehnung an DIN ISO 787/XI, JIS K 5101/18 (nicht gesiebt)
3) in Anlehnung an DIN ISO 787/II, ASTM D 280, JIS K 5101/21
4) in Anlehnung an DIN 55921, ASTM D 1208, JIS K 5101/23
5) in Anlehnung an DIN ISO 787/IX, ASTM D 1208, JIS K 5101/24
6) in Anlehnung an DIN ISO 787/XVIII, JIS K 5101/20
7) bezogen auf die 2 Stunden bei 105 °C getrocknete Substanz
8) bezogen auf die 2 Stunden bei 1.000 °C geglühte Substanz
9) spezielle vor Feuchtigkeit schützende Verpackung

(fortgesetzt)

| |
|---|
| 10) in Wasser: Ethanol 1 : 1 |
| 11) HCl-Gehalt in Bestandteil des Glühverlustes |

Zur Herstellung der Siliciumdioxide wird in eine Knallgasflamme aus Wasserstoff und Luft eine flüchtige Siliciumverbindung eingedüst. In den meisten Fällen verwendet man Siliciumtetrachlorid. Diese Substanz hydrolysiert unter dem Einfluß des bei der Knallgasreaktion entstehenden Wassers zu Siliciumdioxid und Salzsäure. Das Siliciumdioxid tritt nach dem Verlassen der Flamme in eine sogenannte Koagulationszone ein, in der die Aerosil-Primärteilchen und -Primäraggregate agglomerieren. Das in diesem Stadium als eine Art Aerosol vorliegende Produkt wird in Zyklonen von den gasförmigen Begleitsubstanzen getrennt und anschließend mit feuchter Heißluft nachbehandelt.

Durch dieses Verfahren läßt sich der Rest-Salzsäuregehalt unter 0,025 % senken. Da das Siliciumdioxid am Ende dieses Prozesses mit einer Schüttdichte von nur ca. 15 g/l anfällt, wird eine Vakuumverdichtung angeschlossen, mit der Stampfdichten von ca. 50 g/l und mehr eingestellt werden können.

Die Teilchengrößen der Siliciumdioxide können mit Hilfe der Reaktionsbedingungen, wie zum Beispiel Flammentemperatur, Wasserstoff- oder Sauerstoffanteil, Siliciumtetrachloridmenge, Verweilzeit in der Flamme oder Länge der Koagulationsstrecke, variiert werden.

Die BET-Oberfläche wird gemäß DIN 66 131 mit Stickstoff bestimmt.

Das Porenvolumen wird rechnerisch aus der Summe von Mikro-, Meso- und Makroporenvolumen bestimmt. Die Bestimmung der Mikro- und Mesoporen erfolgt durch Aufnahme einer $N_2$-Isotherme und deren Auswertung nach BET, de Boer und Barret, Joyner, Halenda. Die Bestimmung der Makroporen D > 30 nm erfolgt durch die Hg Porosimetrie. Für die Bestimmung der Makroporen wird die Probe 15 h bei 100 °C im Trockenschrank getrocknet und bei Raumtemperatur im Vakuum eintgast.

Für die Bestimmung der Mikro- und Mesoporen wird die Probe 15 h bei 100 °C im Trockenschrank getrocknet und 1 h bei 200 °C im Vakuum entgast.

Die Silanolgruppenkonzentration wird mit der Lithiumalanatmethode bestimmt. Dabei werden die SiOH-Gruppen mit $LiAlH_4$ umgesetzt und die bei dieser Reaktion entstehende Menge an Wasserstoff über den Druck bestimmt.

<u>Meßprinzip</u>

Das Granulat wird in einen Vierhalskolben eingewogen. Der Kolben wird evakuiert und das Ölbad auf 150 °C aufgeheizt. Die Temperatur in dem Kolben (sie wird mit einem Innenthermometer kontrolliert) steigt bei dieser Ölbadtemperatur auf ca. 130 °C an. Der Druck während der Vorbehandlung wird mit einem Druckmeßgerät $PI_2$ (TM 210, Fa. Leybold, Meßbereich $10^3$- $10^{-3}$ mbar) erfaßt. Die Desorption des Wassers kann über die Druckmessung verfolgt werden. Zum Ende der Vorbehandlung (30 min bei Endtemperatur) muß ein Druck von weniger als $10^{-2}$ mbar erreicht werden.

Nach dem Ende der Vorbehandlung wird durch Schließen des Absperrhahns der evakuierte Kolben von der Vakuumanlage getrennt und auf Normaltemperatur gebracht. Die eigentliche Messung beruht darauf, daß über den Tropftrichter eine abgemessene Menge an $LiAlH_4$-Lösung in den Kolben gegeben wird und der Druckanstieg durch den sich bildenden Wasserstoff gemessen wird. Ist das Volumen des Kolbens bekannt, kann die Menge an $H_2$ über das ideale Gasgesetz berechnet werden. Der Druck wird mit einem digitalen Meßgerät ($PI_1$) erfaßt (MKS Instruments PR-2000), dessen Meßbereich zwischen 0 und 1 bar liegt.

Die eingesetzte $LiAlH_4$-Lösung (2 % $LiAlH_4$ in Diethylenglykoldimethylether) ist vor Versuchsdurchführung zu entgasen, um leicht flüchtige Bestandteile, die die Druckmessung verfälschen, zu entfernen. Hierzu wird über eine zweite Vakuumpumpe der Druck über der Lösung im Tropftrichter bis auf den Dampfdruck gesenkt (3,7 mbar bei 22 °C), so daß die Flüssigkeit siedet. Durch eine Leermessung ohne Probe ist zu prüfen, ob die Lösung ausreichend entgast ist. Bei der Bestimmung des Wasserstoffdruckes ist mit dem Dampfdruck des Lösungsmittels zu korrigieren.

<u>Auswertung</u>

Die Eichung der Apparatur erfolgt derart, daß zunächst das Volumen des mit einem Schliffstopfen versehenen Tropftrichters durch Auslitern bestimmt wird. Das Volumen des Reaktionskolbens inklusive aller Anschlußleitungen bis zum Absperrhahn erhält man durch folgendes Experiment:

Der mit Luft bei Atmosphärendruck gefüllte Tropftrichter wird auf den evakuierten Kolben aufgesetzt. Anschließend wird durch Öffnen des Tropftrichterhahns für einen Druckausgleich zwischen beiden Volumina gesorgt. Der sich einstellende Druck wird vom digitalen Meßgerät angezeigt. Aus der Stoffbilanz erhält man das Volumen des Reaktionsgefäßes. Bei der derzeitigen Anordnung erhält man ein Volumen $V_R$ = 243,8 ml.

Die Molzahl des gebildeten Wasserstoffs erhält man aus den Gleichungen:

$$n = \frac{p \cdot V(kor)}{RT}$$

$$V_{kor} = V_R - V_{Feststoff} - V_{Lösung}$$

p ist der Druckanstieg im Reaktionskolben. Dieser Wert ist entsprechend dem Dampfdruck des Lösungsmittels (3,7 mbar bei 22 °C) zu korrigieren. Bei stark von 22 °C abweichenden Raumtemperaturen ist der Dampfdruck aus der Dampfdrucktabelle zu entnehmen. Die Probeneinwaage ist zweckmäßigerweise so zu wählen, daß für p ein Wert zwischen 200 und 800 mbar erhalten wird. In diesem Fall wirken sich geringere Änderungen des Dampfdruckes durch Temperaturschwankungen kaum noch auf das Ergebnis aus.

Das Volumen des Reaktionsgefäßes ist um das Feststoffvolumen und um das Volumen der eingebrachten Lösung zu korrigieren. Erstes ergibt sich aus Einwaage und Dichte, letzteres wird am Tropftrichter abgelesen.

Die Silanolgruppendichte erhält man schließlich über die Gleichung:

$$d = \frac{n \cdot N_L}{F}$$

$N_L$: Lohschmidt-Zahl
F: Oberfläche des eingewogenen Feststoffes

Die Proben werden wie folgt behandelt:

1 h Ausheizen bei 120 °C und 0,2 mbar; Abkühlen auf 60 °C; Zugabe von $LiAlH_4$; nach 10 min Ablesen der entstandenen Druckdifferenz.

Die Korngrößenverteilung wird mittels des laseroptischen Korngrößenanalysators Cilas Granulametre 715 bestimmt.

Das Stampfvolumen wird in Anlehnung an ASTM D 4164-88 bestimmt.

Geräte:

Stampfvolumeter STA V 2003 der Fa. Engelsmann nach DIN 53194, Abs. 5.2. b-f Meßzylinder 250 ml, Teilstriche je 2 ml Waage mit Fehlergrenze max. ± 0,1 g

Durchführung

Stelle das Zählerwerk des Stampfvolumeters auf 1000 Hübe. Tariere den Meßzylinder.
Fülle Granulat in den Meßzylinder bis zu 250 ml Marke. Notiere die Einwaage (± 0,1 g).
Spanne den Meßzylinder in das Stampfvolumeter und schalte das Gerät ein.
Stampfende → Gerät schaltet nach 1000 Hüben automatisch ab.
Lese das gestampfte Schüttvolumen auf 1 ml genau ab.

Berechnung

E: Granulateinwaage in g
V: Abgelesenes Volumen in ml
W: Wassergehalt in Gew.-% (bestimmt nach Prüfvorschrift P001)

$$\text{Stampfdichte} = \frac{E \times (100 - W)}{V \times 100}$$

Der pH-Wert wird in 4 %iger wäßriger Dispersion bestimmt, bei hydrophoben Katalysatorträgern in Wasser: Ethanol 1 : 1.

Herstellung der erfindungsgemäßen Granulate

Das pyrogen hergestellte Siliciumdioxid wird in vollentsalztem Wasser dispergiert. Dabei wird ein Dispergieraggregat verwendet, das nach dem Rotor/Stator-Prinzip arbeitet. Die entstehenden Suspensionen werden sprühgetrocknet. Die Abscheidung des Fertigproduktes erfolgt über Filter oder Zyklon.
Die Temperung der Sprühgranulate erfolgt in Muffelöfen.
Die sprühgetrockneten und eventuell getemperten Granulate werden zur Silanisierung in einem Mischer vorgelegt und unter intensivem Mischen gegebenenfalls zunächst mit Wasser und anschließend mit dem Silan Si 108 (Trimethoxyoctylsilan) oder HMDS (Hexamethyldisilazan) besprüht. Nachdem das Sprühen beendet ist, wird noch 15 bis 30 min nachgemischt und anschließend 1 bis 4 h bei 100 bis 400 °C getempert.
Das eingesetzte Wasser kann mit einer Säure, zum Beispiel Salzsäure, bis zu einem pH-Wert von 7 bis 1 angesäuert sein. Das eingesetzte Silanisierungsmittel kann in einem Lösungsmittel, wie zum Beispiel Ethanol, gelöst sein.

| *Beispiel* | ***Vergleich 1*** | ***2*** | ***3*** | ***4*** | ***Vergleich 5*** |
|---|---|---|---|---|---|
| **Ausgangs-Aerosil** | **380** | **380** | **380** | **380** | **380** |
| **Daten zur Sprühtrocknung** | | | | | |
| Menge $H_2O$ (kg) | 10 | 10 | 105 | 105 | 15 |
| Menge Aerosil (kg) | 1,5 | 1,5 | 14,7 | 14,7 | 1,5 |
| Zerstäubung mit | Scheibe | Scheibe | Scheibe | Scheibe | Scheibe |
| Betriebstemperatur (C°) | 380 | 380 | 380 | 440 | 380 |
| Ablufttemperatur (°C) | 105 | 105 | 105 | 108 | 105 |
| Abscheidung | Filter | Filter | Filter | Filter | Zyklon |
| **Daten Temperung (h/°C)** | - | - | 2/700 | 2/700 | - |
| **Daten zur Modifizierung der Oberfläche** | | | | | |
| Reagenz | - | Si 108 | Si 108 | HMDS | - |
| Menge [g/100 g Aerosil] | - | 25 | 25 | 20 | - |
| Wassermenge [g/100 g Aerosil] | - | - | 5 | 5 | - |
| Temperzeit (h) | - | 2 | 2 | 4 | - |
| Temperatur (°C) | - | 120 | 120 | 140 | - |
| **Physikalisch-chemische Daten** | | | | | |
| BET-Oberfläche ($m^2/g$) | 350 | 197 | 189 | 212 | 277 |
| Porenvolumen (ml/g) | 2,09 | 1,69 | 1,55 | 1,68 | 1,69 |
| Porenvolumen der Poren < 5 nm in % des Gesamtvolumens | n.b. | 1,8 | n.b. | n.b. | n.b. |
| Mesoporen 2-30 nm (ml/g) | 1,34 | 1,04 | 1,12 | 1,17 | 0,66 |
| Makroporen > 30 nm (ml/g) | 0,75 | 0,65 | 0,43 | 0,51 | 1,03 |
| Korngröße $d^{50}$ ($\mu m$) | 38 | 40 | 66 | 53 | 39 |
| Stampfvolumen (g/l) | 320 | 390 | 420 | 370 | 260 |
| pH-Wert | 4,7 | 5,0 | 5,6 | 7,2 | 4,8 |
| Kohlenstoffgehalt % | - | 10,9 | 10,4 | 3,8 | - |
| Silanolgruppenkonzentration (mmol OH/g) | 1,80 | 1,18 | 0,74 | 0,37 | 1,50 |

| *Beispiel* | ***6*** | ***7*** | ***8*** | ***Vergleich 9*** | ***10*** |
|---|---|---|---|---|---|
| **Ausgangs-Aerosil** | **300** | **300** | **300** | **0 x 50** | **0 x 50** |
| **Daten zur Sprühtrocknung** | | | | | |
| Menge $H_2O$ (kg) | 15 | 105 | 105 | 10 | 10 |
| Menge Aerosil (kg) | 1,5 | 14,7 | 14,7 | 1,5 | 1,5 |
| Zerstäubung mit | Scheibe | Einstoffdüse | Zweistoffdüse | Scheibe | Scheibe |

(fortgesetzt)

| *Beispiel* | ***6*** | ***7*** | ***8*** | ***Vergleich 9*** | ***10*** |
|---|---|---|---|---|---|
| **Ausgangs-Aerosil** | **300** | **300** | **300** | **0 x 50** | **0 x 50** |
| **Daten zur Sprühtrocknung** | | | | | |
| Betriebstemperatur (C°)<br>Ablufttemperatur (°C)<br>Abscheidung | 380<br>105<br>Zyklon | 440<br>108<br>Filter | 440<br>108<br>Filter | 380<br>105<br>Zyklon | 380<br>105<br>Zyklon |
| **Daten Temperung (h/°C)** | | | 2/700 | | |
| **Daten zur Modifizierung der Oberfläche** | | | | | |
| Reagenz<br>Menge [g/100 g Aerosil]<br>Wassermenge [g/100 g Aerosil]<br>Temperzeit (h)<br>Temperatur (°C) | HMDS<br>15<br>5<br>4<br>140 | Si 108<br>25<br>5<br>2<br>120 | HMDS<br>20<br>5<br>4<br>140 | -<br>-<br>-<br>-<br>- | HMDS<br>3<br>-<br>5<br>140 |
| **Physikalisch -chemische Daten** | | | | | |
| BET-Oberfläche ($m^2/g$)<br>Porenvolumen (ml/g)<br>Porenvolumen der Poren < 5 nm in % des Gesamtvolumens<br>Mesoporen 2-30 nm (ml/g)<br>Makroporen > 30 nm (ml/g)<br>Korngröße $d^{50}$ (μm)<br>Stampfvolumen (g/l)<br>pH-Wert<br>Kohlenstoffgehalt %<br>Silanolgruppenkonzentration (mmol OH/g) | 222<br>1,79<br>n.b.<br>0,78<br>1,01<br>32<br>290<br>6<br>2,7<br>0,61 | 180<br>1,49<br>1,8<br>0,60<br>0,89<br>40<br>320<br>5,2<br>9,3<br>1,15 | 195<br>1,51<br>n.b.<br>0,60<br>0,91<br>43<br>300<br>6,9<br>3,3<br>0,40 | 46<br>0,73<br>n.b.<br>0,08<br>0,65<br>21<br>540<br>5,3<br>-<br>0,29 | 41<br>0,68<br>n.b.<br>0,09<br>0,59<br>21<br>570<br>7,4<br>0,5<br>0,14 |

| *Beispiel* | ***Vergleich 11*** | ***12*** | ***Vergleich 13*** | ***14*** |
|---|---|---|---|---|
| **Ausgangs-Aerosil** | **130** | **130** | **200** | **200** |
| **Daten zur Sprühtrocknung** | | | | |
| Menge $H_2O$ (kg)<br>Menge Aerosil (kg)<br>Zerstäubung mit<br>Betriebstemperatur (°C)<br>Ablufttemperatur (°C)<br>Abscheidung | 15<br>1,5<br>Scheibe<br>380<br>105<br>Zyklon | 15<br>1,5<br>Scheibe<br>380<br>105<br>Zyklon | 15<br>1,5<br>Scheibe<br>380<br>105<br>Zyklon | 15<br>1,5<br>Scheibe<br>380<br>105<br>Zyklon |
| **Daten Temperung (h/°C)** | | | | |
| **Daten zur Modifizierung der Oberfläche** | | | | |
| Reagenz<br>Menge [g/100 g Aerosil]<br>Wassermenge [g/100 g Aerosil]<br>Temperzeit (h)<br>Temperatur (°C) | -<br>-<br>-<br>-<br>- | HMDS<br>5<br>-<br>5<br>140 | -<br>-<br>-<br>-<br>- | HMDS<br>7<br>-<br>5<br>140 |

(fortgesetzt)

| Physikalisch-chemische Daten | | | | |
|---|---|---|---|---|
| BET-Oberfläche ($m^2/g$) | 131 | 111 | 196 | 153 |
| Porenvolumen (ml/g) | 1,92 | 1,62 | 2,25 | 2,04 |
| Porenvolumen der Poren < 5 nm in % des Gesamtvolumens | n.b. | 1,7 | n.b. | 0,9 |
| Mesoporen 2-30 nm (ml/g) | 0,24 | 0,24 | 0,46 | 0,47 |
| Makroporen > 30 nm (ml/g) | 1,68 | 1,38 | 1,79 | 1,57 |
| Korngröße $d^{50}$ (μm) | 20 | 20 | 14 | 14 |
| Stampfvolumen (g/l) | 250 | 280 | 230 | 240 |
| pH-Wert | 4,8 | 7,3 | 4,8 | 7,2 |
| Kohlenstoffgehalt % | - | 1,3 | - | 1,7 |
| Silanolgruppenkonzentration (mmol OH/g) | 0,83 | 0,44 | 1,16 | 0,56 |

Die Teilchengrößenverteilung der gemäß den Beispielen 1 bis 14 erhaltenen Granulate werden in den Figuren 1 bis 4 tabellarisch und graphisch dargestellt.

Die Beispiele 1, 5, 9, 11 und 13 sind Vergleichsbeispiele gemäß dem Stand der Technik (DE-A 36 11 449 Liu).

Beispiele für die Anwendung der erfindungsgemäßen-Granulate als Katalysatorträger bei der Herstellung von Polyethylen

Bezogen auf die Aktivkomponente Titan erzielten die Katalysatoren in der Polymerisation von Ethylen folgende Resultate:

| Katalysator auf Träger Beispiel | Ausbeute kg PE/g Ti | Bemerkung |
|---|---|---|
| Beispiel 1 | 292 | nur sprühgetrockneter Träger gemäß Beispiel 1 |
| Beispiel 2 | 360 | chemisch behandelter Träger gemäß Beispiel 4 |
| Beispiel 3 | 376 | thermisch und chemisch behandelter Träger gemäß Beispiel 6 |

## Patentansprüche

1. Granulate auf Basis von pyrogen mittels Flammenhydrolyse aus einer flüchtigen Siliciumverbindung hergestelltem Siliciumdioxid, **dadurch gekennzeichnet, daß** sie bei einer Temperatur von 150 bis 1.100 °C während eines Zeitraumes von 1 bis 8 h getempert und/oder silanisiert sind folgenden physikalisch-chemischen Kenndaten aufweisen:

| | |
|---|---|
| Mittlerer Korndurchmesser | 10 bis 120 μm |
| BET-Oberfläche | 40 bis 400 m2/g |
| Porenvolumen | 0,5 bis 2,5 ml/g |
| Porengrößenverteilung | weniger als 5 % des Gesamtporenvolumens haben einen Porendurchmesser kleiner 5 nm, Rest Meso- und Makroporen |
| pH-Wert | 3,6 bis 8,5 |
| Stampfdichte | 220 bis 700 g/l |

2. Verfahren zur Herstellung der Granulate nach Anspruch 1, **dadurch gekennzeichnet, daß** man pyrogen mittels Flammenhydrolyse aus einer flüchtigen Siliciumverbindung hergestelltes Siliciumdioxid in Wasser dispergiert, wobei die Dispersion eine Konzentration an Siliciumdioxid von 5 bis etwa 19,9 Gew.-% aufweist sprühtrocknet und die erhaltenen Granulate bei einer Temperatur von 150 bis 1.100 °C während eines Zeitraumes von 1 bis 8 h tempert

und/oder Silanisiert.

3. Verwendung der Granulate gemäß Anspruch 1 als Katalysatorträger, insbesondere zur Herstellung von Polymerisationskatalysatoren.

4. Verwendung der Granulate gemäß Anspruch 1 als Katalysatorträger für die Herstellung von Katalysatoren zur Herstellung von Polyethylen.

## Claims

1. Granules based on silicon dioxide pyrogenically produced from a volatile silicon compound by means of flame hydrolysis **characterized in that** they are heated and/or silanised at a temperature of 150 to 1,100 °C for a period of 1 to 8 h.and have the following physicochemical properties:

| | |
|---|---|
| Average grain size: | 10 to 120 µm |
| BET surface area: | 40 to 400 $m^2/g$ |
| Pore volume: | 0.5 to 2.5 ml/g |
| Pore distribution: | less than 5 % of the total pore volume has a pore diameter of less than 5 nm, the remainder meso- and macropores |
| pH value: | 3.6 to 8.5 |
| Tamped density: | 220 to 700 g/l |

2. Method for the preparation of the granules according to claim 1, **characterised in that** silicon dioxide pyrogenically produced from a volatile silicon compound by means of flame hydrolysis is dispersed in water, the dispersion having a silicon dioxide concentration of 5 to about 19.9 wt. %, spray dried and the granules obtained are heated and/or silanised at a temperature of 150 to 1,100 °C for a period of 1 to 8 h.

3. Use of the granules according to claim 1 as catalyst supports, in particular for the production of polymerisation catalysts.

4. Use of the granules according to claims 1 as catalyst supports for producing catalysts for the production of polyethylene.

## Revendications

1. Granulés à base de dioxyde de silicium produit par voie pyrogène, au moyen d'une hydrolyse à la flamme en partant de composés de silicium volatils, **caractérisé en ce qu'**ils sont obtenus en régularisant la température à un niveau compris entre 150 et 1100 °C pendant un intervalle de 1 à 8 heures, et/ou en silanisant et qu'ils présentent les caractéristiques physico-chimiques suivantes :

| | |
|---|---|
| Granulométrie moyenne : | 10 à 120 µm |
| Surface BET : | 40 à 400 $m^2/g$ |
| Volume de pores : | 0,5 à 2,5 ml/g |

(suite)

| | |
|---|---|
| Répartition de la taille des pores: | Moins de 5 % du volume total des pores ont un diamètre de pores inférieur à 5 nm, le reste étant constitué de mésopores et de macropores. |
| pH : | 3,6 à 8,5 |
| Densité à l'état comprimé : | 220 à 700 g/l |

**2.** Procédé de fabrication des granulés selon la revendication 1, **caractérisé en ce qu'** on disperse dans l'eau du dioxyde de silicium produit par voie pyrogène au moyen d'une hydrolyse à la flamme à partir d'un composé de silicium volatil, la dispersion présentant une concentration en dioxyde de silicium de 5 à environ 19,9 % en poids, en séchant par pulvérisation et en régularisant la température des granulés obtenus à un niveau compris entre 150 et 1100 °C pendant un intervalle de 1 à 8 heures, et/ou en silanisant.

**3.** Utilisation des granulés selon la revendication 1, comme support de catalyseur, en particulier pour la production de catalyseurs de polymérisation.

**4.** Utilisation des granulés selon la revendication 1, comme support de catalyseur pour la fabrication de catalyseurs en vue de la production de polyéthylène.

# Korngrößenverteilung
## Si-Oxid-Träger

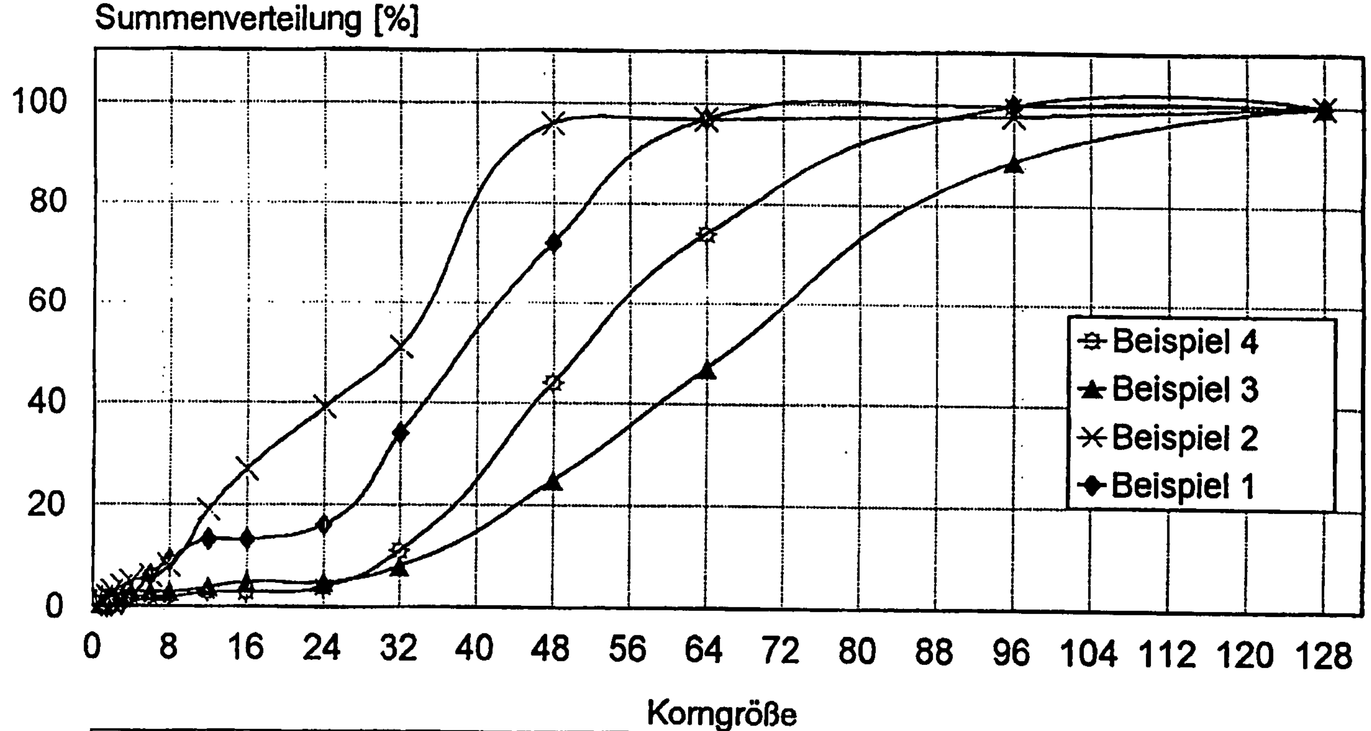


| | 1 | 1,5 | 2 | 3 | 4 | 6 | 8 | 12 | 16 | 24 | 32 | 48 | 64 | 96 | 128 | [µm] |
|---|---|---|---|---|---|---|---|---|---|---|---|---|---|---|---|---|
| Beispiel 1 | 0 | 0 | 0 | 0,4 | 2 | 6 | 9 | 13 | 13 | 16 | 34 | 72 | 97 | 100 | 100 | [%] |
| Beispiel 2 | 1 | 2 | 3 | 4 | 5 | 6 | 8 | 19 | 27 | 39 | 51 | 96 | 97 | 98 | 100 | [%] |
| Beispiel 3 | 0,4 | 0,6 | 0,8 | 2 | 3 | 3 | 3 | 4 | 5 | 5 | 8 | 25 | 47 | 89 | 100 | [%] |
| Beispiel 4 | 2 | 2 | 2 | 2 | 2 | 2 | 2 | 3 | 3 | 4 | 11 | 44 | 74 | 100 | 100 | [%] |

Figur 1

# Korngrößenverteilung
## Si-Oxid-Träger

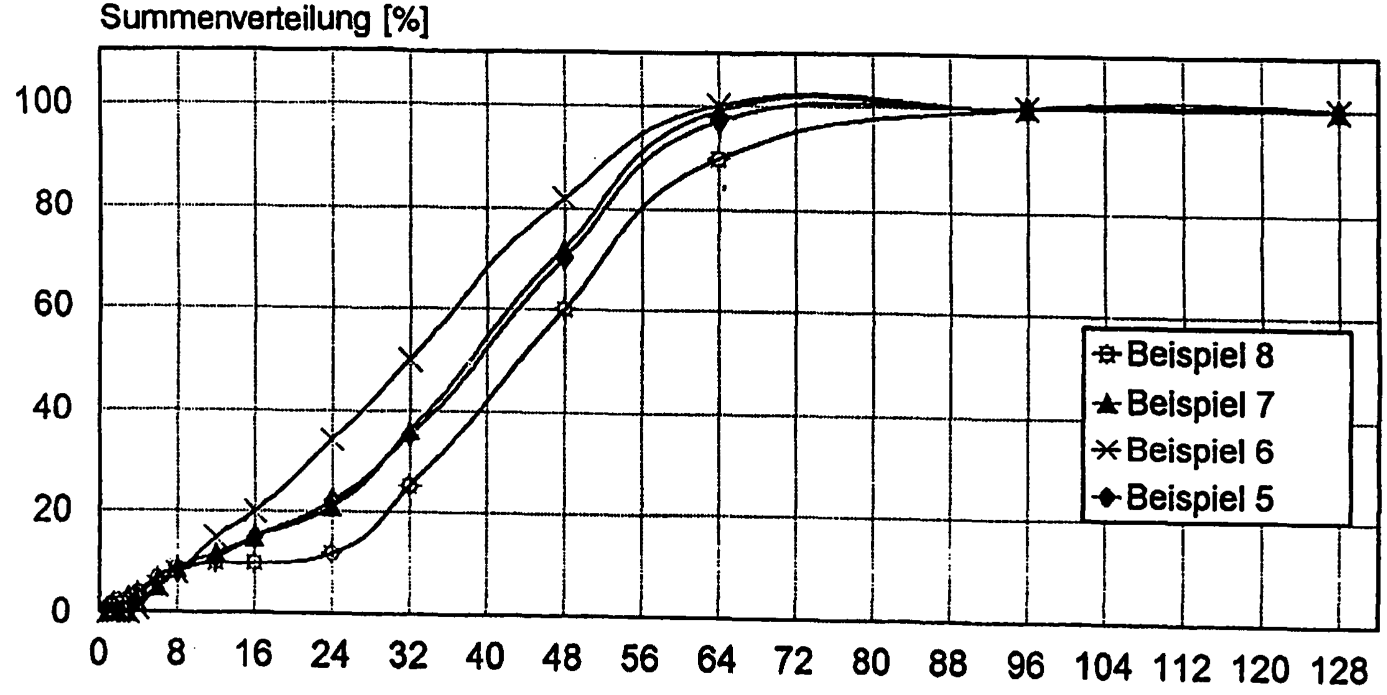


| | 1 | 1,5 | 2 | 3 | 4 | 6 | 8 | 12 | 16 | 24 | 32 | 48 | 64 | 96 | 128 | [µm] |
|---|---|---|---|---|---|---|---|---|---|---|---|---|---|---|---|---|
| Beispiel 5 | 1 | 2 | 2 | 3 | 4 | 6 | 8 | 11 | 15 | 22 | 35 | 70 | 97 | 100 | 100 | [%] |
| Beispiel 6 | 0 | 0 | 0 | 0 | 0,9 | 5 | 8 | 15 | 20 | 34 | 50 | 82 | 100 | 100 | 100 | [%] |
| Beispiel 7 | 0 | 0 | 0 | 0 | 2 | 5 | 9 | 12 | 15 | 21 | 36 | 72 | 99 | 100 | 100 | [%] |
| Beispiel 8 | 0,1 | 0,1 | 0,2 | 1 | 4 | 7 | 9 | 10 | 10 | 12 | 25 | 60 | 90 | 100 | 100 | [%] |

**Figur 2**

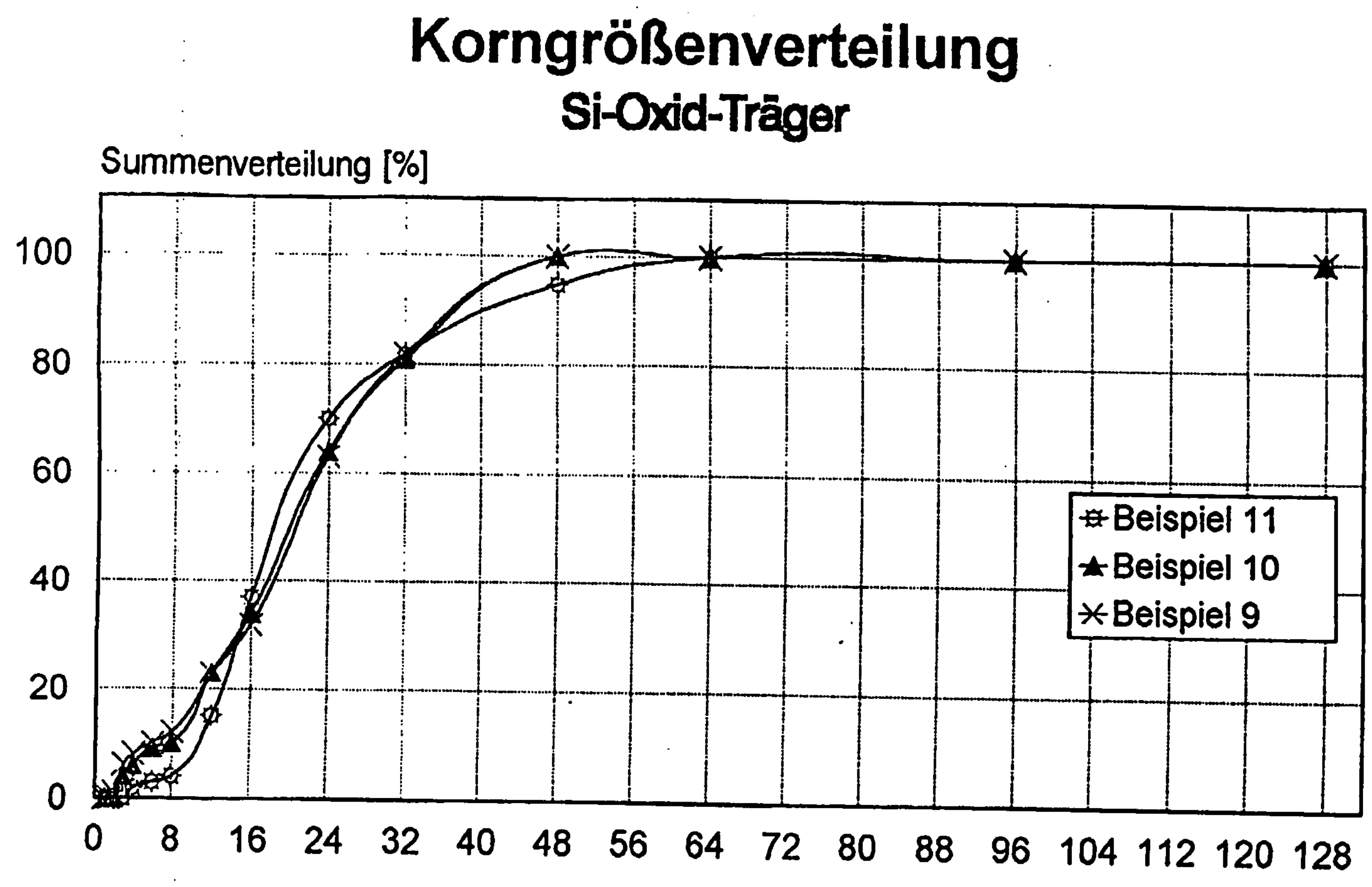


| | 1 | 1,5 | 2 | 3 | 4 | 6 | 8 | 12 | 16 | 24 | 32 | 48 | 64 | 96 | 128 | [µm] |
|---|---|---|---|---|---|---|---|---|---|---|---|---|---|---|---|---|
| Beispiel 9 | 0,1 | 0,1 | 1 | 6 | 8 | 10 | 12 | 23 | 32 | 63 | 82 | 100 | 100 | 100 | 100 | [%] |
| Beispiel 10 | 0 | 0 | 0,1 | 4 | 6 | 9 | 10 | 23 | 34 | 64 | 81 | 100 | 100 | 100 | 100 | [%] |
| Beispiel 11 | 0 | 0 | 0 | 0 | 2 | 3 | 4 | 15 | 37 | 70 | 82 | 95 | 100 | 100 | 100 | [%] |

Figur 3

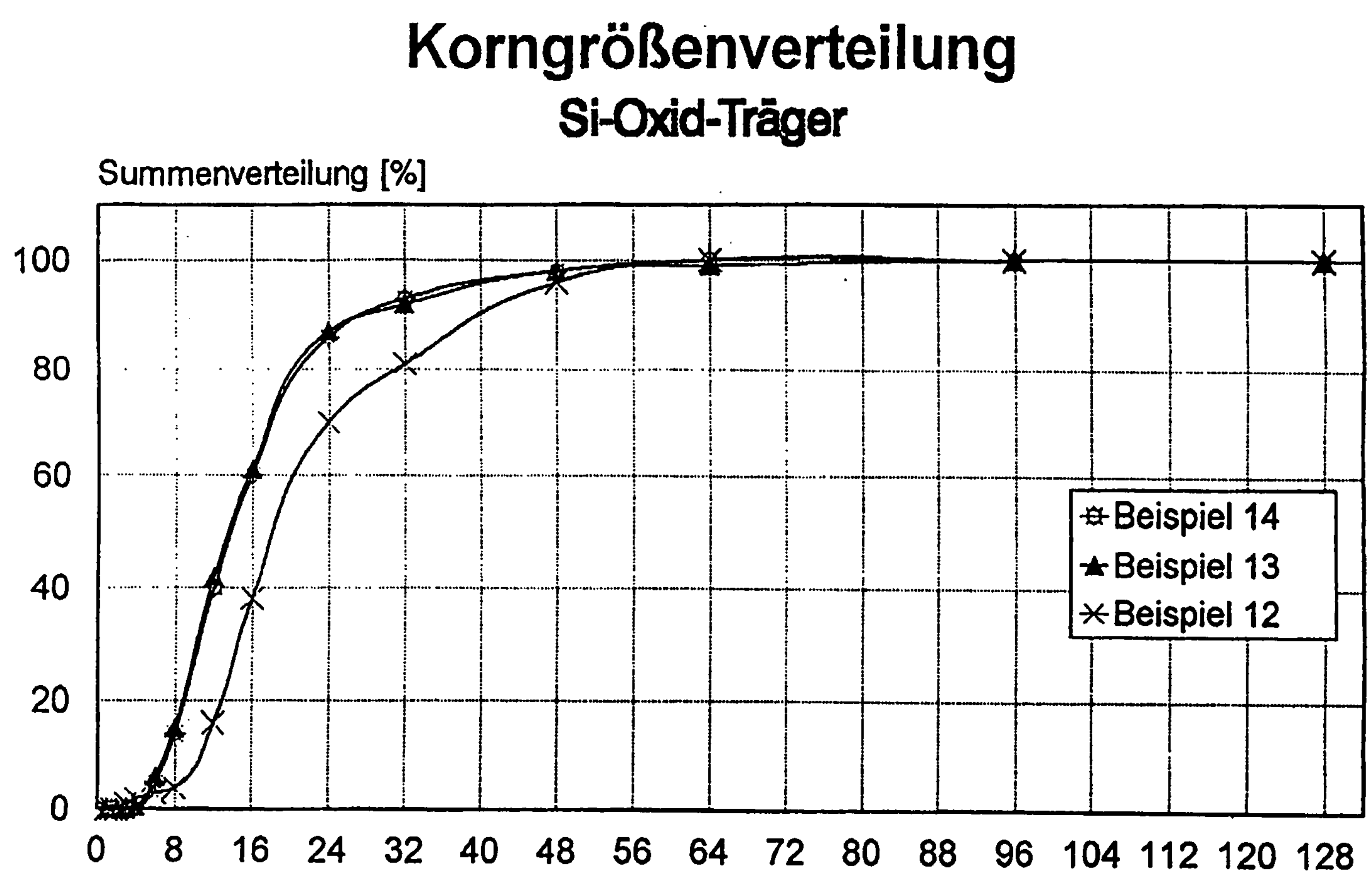


Korngröße

| | 1 | 1,5 | 2 | 3 | 4 | 6 | 8 | 12 | 16 | 24 | 32 | 48 | 64 | 96 | 128 | [µm] |
|---|---|---|---|---|---|---|---|---|---|---|---|---|---|---|---|---|
| Beispiel 12 | 0 | 0 | 0 | 1 | 2 | 3 | 4 | 16 | 38 | 70 | 81 | 96 | 100 | 100 | 100 | [%] |
| Beispiel 13 | 0 | 0 | 0 | 0 | 0,5 | 6 | 15 | 42 | 61 | 87 | 92 | 98 | 99 | 100 | 100 | [%] |
| Beispiel 14 | 0 | 0 | 0 | 0 | 0 | 5 | 14 | 40 | 60 | 86 | 93 | 98 | 100 | 100 | 100 | [%] |

**Figur 4**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 3611449 A
- DE 1209108 A
- EP 0050902 A
- US 4386016 A
- WO 9109881 A